# EUROPEAN PATENT APPLICATION

(11) **EP 4 575 472 A1**
(43) Date of publication of application: **25.06.2025**
(21) Application number: 24192303.6
(22) Date of filing: 01.08.2024
(51) Int. Cl.: G01N 21/90, G01N 21/892, G01N 21/88, B65B 5/02, B65B 57/02, B29C 45/76, G01B 11/24

(54) **INSPECTION SYSTEM FOR A CAPPING MACHINE AND METHOD FOR INSPECTING CLOSURE STRUCTURES PRE-APPLIED ON PACKAGES CONTAINING A POURABLE PRODUCT**

(30) Priority: 19.12.2023 IT 202300027234
(71) Applicant: Tetra Laval Holdings & Finance S.A., 1009 Pully (CH)
(72) Inventor: BOZZOLI, Valerio, 41123 Modena (IT)
(74) Representative: Tetra Pak - Patent Attorneys SE

(57) **Abstract**

There is described an inspection system (14) for a capping machine (13) configured to apply caps (6) onto packages (2) containing a pourable product and each provided with a respective closure structure (5) comprising at least a collar (5a) pre-applied at a respective main wall (2b) of the package (2) and adapted to receive one said cap (6), the inspection system (14) being configured to sequentially inspect the closure structures (5) and comprising:
- an imaging device (15) configured to acquire at least one image (16) per package of an inspection area (17) of the package (2), the inspection area (17) including at least the collar (5a); and
- a control unit configured to analyze each acquired image (16) for determining a shape of the collar (5a) from said acquired image (16);
wherein the control unit is configured to calculate a deviation of the determined shape of the collar (5a) from a nominal reference shape of the collar (5a).

## Description

### TECHNICAL FIELD

The present invention relates to an inspection system for a capping machine, in particular for a capping machine configured to apply caps onto packages containing a pourable product, preferably packages formed from a multilayer packaging material and containing a pourable food product.

The present invention further relates to a method for inspecting closure-structures pre-applied on packages containing a pourable product, preferably a pourable food product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material.

The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging apparatuses, which form and fill the packages starting from a multilayer web of packaging material.

In particular, a continuous tube is formed from the web of packaging material which is initially wound in a reel and fed through a plurality of unwinding rollers.

The web of packaging material is typically sterilized in the packaging apparatus, e.g. by applying a chemical sterilizing agent, such as hydrogen peroxide solution, which, once sterilization is completed, is removed from the surfaces of the packaging material, e.g. evaporated by heating. The web so sterilized is then maintained in a closed, sterile environment, and, while advanced by the aforementioned unwinding rollers, is folded to form the tube by means of a known web folding unit and then sealed longitudinally.

In order to perform the package forming operations, the tube is continuously fed along a first direction, normally a straight vertical direction, is filled with the sterilized food product from above and is formed, sealed and subsequently cut along equally spaced transversal cross-sections extending along a second direction, normally a direction orthogonal to the first direction.

To this end, the known packaging apparatuses comprise a forming and sealing unit configured to form the tube, so as to imprint an external shape to it, corresponding to the desired shape of the package, and to seal the tube at equally spaced cross-sections orthogonal to the tube advancement direction.

Generally, a packaging apparatus of the above type comprises a pair of alternately movable forming and sealing jaws which are controllable with a reciprocating movement in the first direction and in a third direction orthogonal to the first direction and the second direction to interact with the tube at successive portions thereof.

So-called pillow packs are obtained thereby, which have a longitudinal sealing band, a top transversal sealing band and a bottom transversal sealing band. The pillow packs are then cut at the cross-sections to be separated from one another and directed to a folding unit of the packaging machine for the final folding thereof.

The finished packages are thereby obtained.

Some packaging apparatuses are configured to produce the packages in the aforementioned manner and further to apply an opening device on each package, the opening device being arranged at a pouring outlet of the package. The opening device is configured to allow for selectively opening and closing the pouring outlet.

A typical opening device comprises a neck or collar arranged at the pouring outlet and a cap secured to the collar and controllable between a closing position and an opening position.

In light of the above, such packaging apparatuses comprise a package forming machine configured to fill, form, seal and fold the packages and a capping machine configured to apply at least the cap to the packages.

The use of webs of packaging material provided with a longitudinal sequence of closure structures pre-applied thereon is increasingly widespread.

For example, each closure structure may comprise at least one aforementioned neck or collar.

Hence, in this case, a typical package forming machine is configured to produce packages having a collar pre-applied thereon.

The collars are typically made of plastic material and are pre-applied by a molding process on the web of packaging material (opportunely at the respective pouring outlets which are pre-obtained on the web) prior to the formation of the tube, according to a manner known and not described in detail.

In such an embodiment, the capping machine is configured to apply and secure the caps on the respective pre-applied collars which are already provided on the packages.

In some cases, each closure structure may also comprise an opening element configured for opening the pouring outlet during a first-time movement of the cap from the closing position to the opening position, according to a manner known and not described in detail.

Such opening device is usually co-molded with the collar.

The correct application of the caps on the respective packages is important to guarantee a correct function.

Therefore, some capping machines are provided with an inspection system configured to determine a correct application of the caps. The inspection system operates by monitoring the position of the cap with respect to the package.

Although the known inspection system and/or capping machines and/or packaging apparatuses are structurally and functionally valid and operate satisfyingly well, the Applicant has observed that they are still open for further improvements.

### DISCLOSURE OF INVENTION

It is therefore an object of the present invention to provide an inspection system for a capping machine and a method for inspecting closure structures pre-applied on packages containing a pourable product, which are designed to meet the above-mentioned need in a straightforward and low-cost manner.

This object is achieved by an inspection system and a method as claimed in the respective appended independent claims.

Preferred embodiments of the inspection system and of the method are laid down in the respective appended dependent claims.

### BRIEF DESCRIPTION OF THE DRAWINGS

A non-limiting embodiment of the present invention will be described by way of example with reference to the accompanying drawings, in which:
Figure 1 is a schematic perspective view, with parts removed for clarity, of a packaging apparatus including an inspection system according to the present invention;
Figure 2 is a larger-scale, exploded perspective view, with parts removed for clarity, of a package obtained with the packaging apparatus of Figure 1 and a cap to be applied thereon;
Figures 3a, 3b and 3c are schematic top views, with parts removed for clarity, of a package obtained with the packaging apparatus of Figure 1.

### BEST MODE FOR CARRYING OUT THE INVENTION

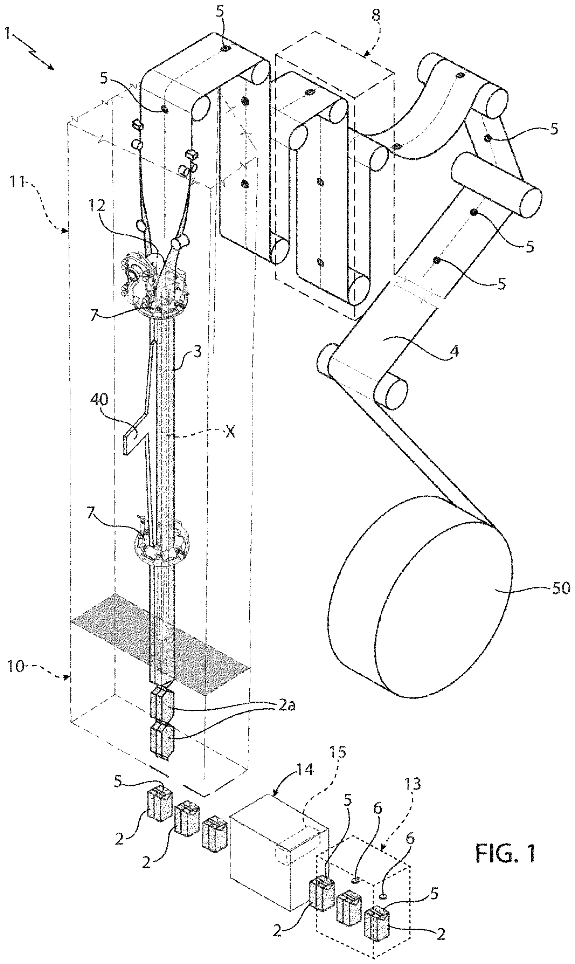

With reference to Figure 1, number 1 indicates as a whole a non-limiting example of a packaging apparatus configured for producing a plurality of sealed packages 2 containing a pourable product, preferably a pourable food product such as pasteurized or UHT milk, water, fruit juice, wine, peas, beans, etc.

In detail, packaging apparatus 1 is configured to form, seal and fold packages 2 starting from a web 4 of packaging material, which is initially wound in a reel 50, and then folded into a tube 3 of packaging material, as explained below.

Preferably, the packaging material has a multilayer structure (not shown), and comprises a layer of fibrous material, e.g. paper, covered on both sides with respective layers of heat-seal plastic material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 2 eventually contacting the pourable product.

As said, the packaging material is initially provided in the form of a web 4.

The present disclosure refers to a packaging apparatus 1 which uses a web 4 provided with a longitudinal sequence of closure structures 5 pre-applied thereon, as shown in Figure 1.

In particular, each one of the aforementioned closure structures 5 is preferably made of plastic material and is adapted to receive a cap 6 (preferably made of plastic material as well). The closure structure 5 is pre-applied by a molding process on web 4 prior to the formation of tube 3, in particular by an injection molding process, according to a manner known and not described in detail.

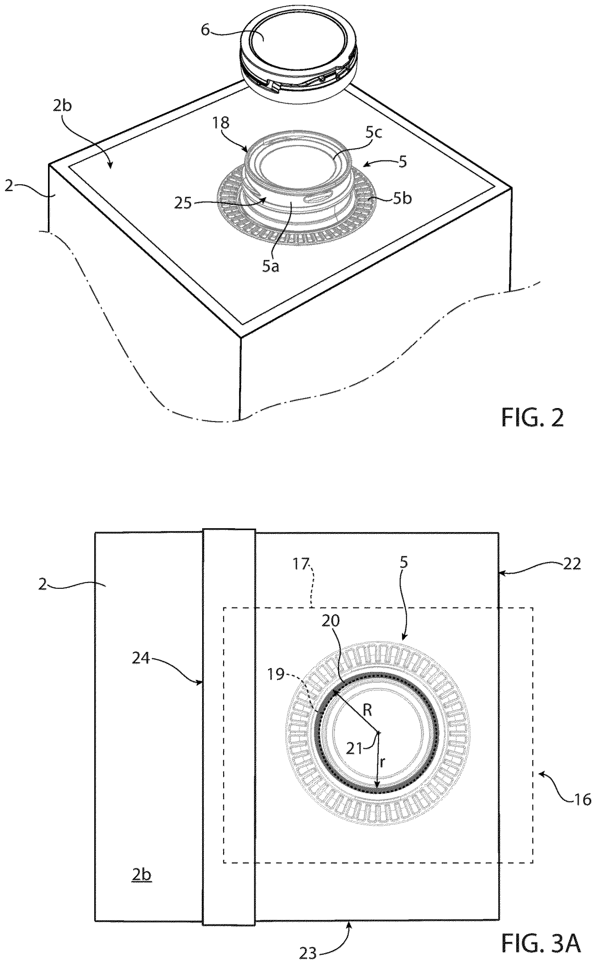

More in particular, as shown in Figure 2, each closure structure 5 has a pouring neck or collar 5a extending along a longitudinal axis A and a base 5b embedded in the packaging material in a known manner.

In detail, collar 5a protrudes (orthogonally) from an outer side of web 4 destined to define the outer wall of packages 2. Base 5b protrudes (slightly) from such outer side and also (slightly) from an inner side of web 4, which is opposite to the outer first and is destined to define the inner wall of packages 2, i.e. the wall which contacts, in use, the pourable product.

Each closure structure 5 is pre-applied on a respective pouring outlet (not shown and usually known as pre-laminated hole or PLH) obtained on web 4 in a known manner.

In detail, the pouring outlet is initially closed and must be pierced to allow the outpour of the pourable product.

The closure structure 5 and the cap 6 define together an opening device of package 2 for selectively allowing the outpour of the pourable product contained therein, such opening device being arranged at the pouring outlet of package 2. The opening device is configured to allow for selectively opening and closing the pouring outlet.

Each closure structure 5 may further comprise an opening element 5c configured for opening (in particular for piercing and ripping apart) the respective pouring outlet during a first-time movement of the cap 6 from a closing position thereof to an opening position thereof, according to a manner known and not described in detail.

Briefly, opening device 5c is usually co-molded with collar 5a and base 5b and is preferably destined to be welded to the respective cap 6 in a known manner. Before first opening, opening device 5c is connected to an inner side of the collar 5a through a membrane (not shown) which is then broken during first opening. Such membrane initially closes in a fluid-tight manner the pouring outlet.

As schematically shown in Figure 1, the packaging apparatus 1 comprises a package filling and forming machine configured to fill, form and seal a plurality of packages 2 with pre-applied closure structures 5, as explained below.

The packaging apparatus 1 comprises conveying means configured to advance the web 4 along an advancement path.

The packaging apparatus 1 comprises a tube folding device 7 for progressively folding the advancing web 4 into a tube 3 of packaging material, in a manner known and not described in detail.

The packaging apparatus 1 comprises a sealing element 40 for providing tube 3 with a longitudinal seal, in a manner known and not described in detail.

The packaging apparatus 1 comprises a sterilization unit 8 configured for applying a sterilizing agent, for example containing hydrogen peroxide, on web 4 prior to its folding into tube 3.

The packaging apparatus 1 comprises a forming and sealing unit 10 for forming tube 3 by imparting a predetermined external shape, corresponding to a precursor of the shape of package 2, to successive longitudinal portions of tube 3, and for sealing tube 3 at equally spaced cross-sections.

The packaging apparatus 1 comprises an isolation chamber 11 internally defining an environment containing a controlled atmosphere, in particular sterile and/or aseptic gas, preferably sterile and/or aseptic air, and housing the forming and sealing unit 10 and the tube folding device 7.

The packaging apparatus 1 comprises a filling system 12 (only partially shown) to fill tube 3 with the pourable product.

Preferably, forming and sealing unit 10 has an axis X along which tube 3 is fed, in use.

Axis X is parallel to a straight direction, which preferably is a straight vertical direction.

Hence, in use, tube 3 is fed along axis X, downwards, and while being filled from above is formed and sealed by forming and sealing unit 10, according to a manner known and not described in detail.

More specifically, tube 3 is drawn (downwards) along axis X by forming and sealing unit 10 in a known manner.

In this way, a plurality of pillow packs 2a are obtained.

Packaging apparatus 1 further comprises a folding unit (known per se and not shown) for folding the pillow packs 2a, thereby obtaining packages 2, according to a manner known and not described in detail.

In particular, each package 2 is folded in such a way that the respective closure structure 5 is arranged on a main wall 2b of the package 2 (Figure 2), according to a manner known and not described in detail.

The packaging apparatus 1 further comprises a capping machine 13 configured for sequentially applying caps 6 on packages 2, and in particular on closure structures 5.

In detail capping machine 13 comprises a cap applicator (of the type known and not described in detail, not shown) configured to sequentially apply one cap 6 onto each collar 5a.

Expediently, capping machine 13, and hence cap applicator, is arranged operatively downstream of the folding unit, so that caps 6 are applied to the filled, formed and sealed packages 2.

Advantageously, packaging apparatus 1 comprises an inspection system 14 configured to sequentially inspect each closure structure 5 according to a manner described hereinafter.

Accordingly, inspection system 14 is arranged operatively upstream of the cap applicator of capping machine 13. Preferably, inspection system 14 is arranged operatively downstream of the folding unit.

Reference will be made in the following to a single package 2 with a respective closure structure 5 which is adapted to receive a corresponding cap 6.

Inspection system 14 comprises an imaging device 15 (schematically depicted in Figure 1), for example a 2D camera or a 3D camera, configured to acquire at least one image 16 per package of an inspection area 17 of the package 2.

In one embodiment, inspection area 17 includes at least collar 5a, as schematically shown in Figure 3a.

Inspection system 14 comprises a control unit or analyzing unit (not shown). The control unit is preferably configured to analyze each acquired image 16 for determining a shape of collar 5a from the acquired image 16.

According to an aspect of the present disclosure, the control unit is preferably configured to calculate a deviation of the determined shape of collar 5a from a nominal reference shape of collar 5a.

In detail, the control unit is configured to determine a circularity of collar 5a from the acquired image 16 and to calculate a deviation of the determined circularity of collar 5a from a nominal reference circularity value of collar 5a.

In one embodiment, the control unit may be configured to determine the circularity of an inner diameter of collar 5a. Alternatively or additionally, the control unit may be configured to determine the circularity of an outer diameter of collar 5a.

More in detail, inspection area 17 may include a pouring upper rim 18 of collar 5a (shown in Figure 2).

Accordingly, the control unit is advantageously configured to determine a circularity of rim 18 from the acquired image 16 and to calculate a deviation of the determined circularity of rim 18 from a nominal reference circularity value of rim 18.

In other words, the control unit is configured to analyze each acquired image 16 to determine if collar 5a, and in particular rim 18, is within a predetermined circularity tolerance.

More specifically, the control unit according to the present disclosure is configured to, for each acquired image 16:
- determine a plurality of reference points (not shown) on rim 18, i.e. arranged on rim 18;
- extrapolate and/or estimate a reference circular profile 19 of rim 18 based on the determined plurality of reference points;

- detect an actual profile 20 of rim 18 based on the analyzed image 16;
- determine a deviation of actual profile 20 from reference circular profile 19;
- calculate an ovalization of rim 18, and therefore of collar 5a, correlated with the determined deviation.

In other words, the control unit is configured to perform an ovalization check or inspection on each collar 5a.

To this end, the control unit is preferably further configured to:
- determine a geometric center 21 of reference circular profile 19;
- determine a minimum radius r of actual profile 20, with respect to the determined geometric center 21;
- determine a maximum radius R of actual profile 20, with respect to the determined geometric center 21;
- calculate a difference between the maximum radius R and the minimum radius r;
- determine the aforementioned ovalization as a function of the calculated difference.

The above process is schematized in Figure 3a.

In light of the above, inspection system 14 is configured to perform a quality control on each collar 5a defined by the ovalization inspection performed by the control unit, thereby determining a correct or incorrect application of the closure structure 5 on the respective main wall 2b.

As said, inspection system 14 is arranged operatively upstream of capping machine 13. Hence, inspection system 14 according to the present disclosure allows for reducing the risk of the application of caps 6 on non-nominal (i.e. non nominally produced) or faulty packages 2 having non-nominally pre-applied collars 5a. This results in various improvements, such as in reducing the risk of packages 2 which may be difficult to be opened being delivered to end consumers, reducing the waste of caps 6, and reducing non-nominal stresses on capping machine 13 due to ovalized collars 5a.

In one embodiment, inspection area 17 may further include the aforementioned opening element 5c (also called "welding ring").

Accordingly, the control unit is further configured to analyze each acquired image 16 for determining a shape of opening element 5c from said image 16, and to calculate a deviation of the determined shape of opening element 5c from a nominal reference shape of opening element 5c.

In particular, the control unit may be configured for performing an ovalization check or inspection of each opening element 5c similar or corresponding to the one described above for collar 5a, i.e. for rim 18 of each collar 5a.

In this way, inspection system 14 allows for performing an even better quality control on the closure structures 5, since opening device 5c is a crucial part of each closure structure 5, as it defines the joint between cap 6 and the closure structure 5 itself and contributes to the correct opening of the pouring outlet of packages 2.

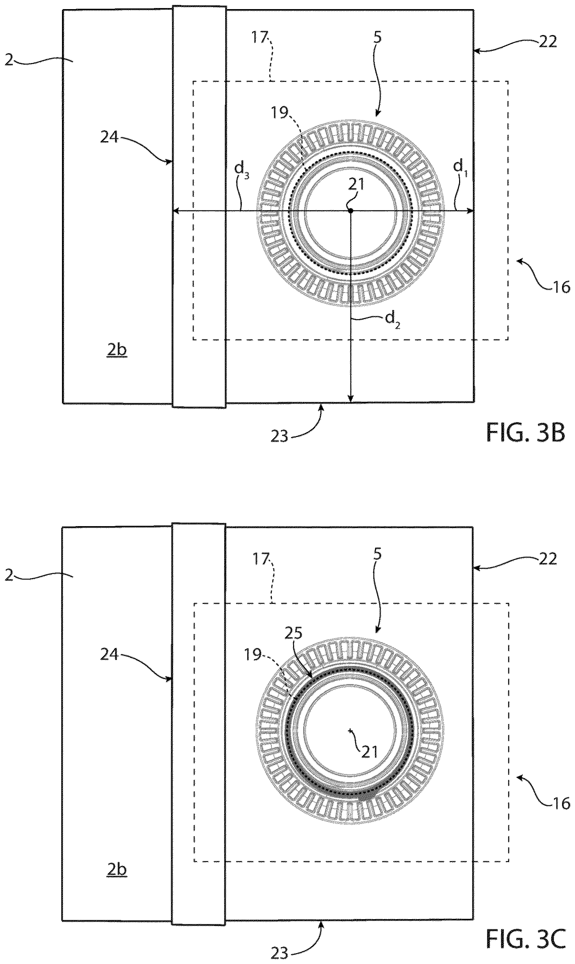

In one embodiment, inspection area 17 may include main wall 2b and rim 18, as schematically shown in Figure 3b.

Accordingly, the control unit is configured to, for each acquired image 16:
- determine a plurality of reference points (not shown) on rim 18, i.e. arranged on rim 18;
- extrapolate and/or estimate said reference circular profile 19 based on the determined plurality of reference points;
- determine said geometric center 21;
- detect at least one distance d1, d2, d3 between geometric center 21 and at least one fixed reference element 22, 23, 24 on main wall 2b;
- calculate a deviation of the detected distance d1, d2, d3 from a nominal reference distance between geometric center 21 and the at least one reference element 22, 23, 24.

It is here noted that the present disclosure may also provide a control unit configured to analyze each acquired image 16 such to detect said deviation of the detected distances d1, d2, d3 from the nominal reference distance, even in isolation from the determination of the shape of the collar 5a. In other words, the determination of the shape (e.g. circularity or ovalization) of the collar 5a may be an optional preferred feature, which is however not necessary and not inextricably linked to the detection of the deviation of the detected distances d1, d2, d3 from the nominal reference distance.

In particular, as shown in Figure 3b, inspection area 17 may include a first edge of main wall 2b, such as a front edge 22, a second edge of main wall 2b transversal to front edge 22, such as a lateral flap edge 23, and a sealing band 24 of package 2 arranged (i.e. folded) on main wall 2b.

The front edge 22, the flap edge 23 and the sealing band 24 may define the aforementioned fixed reference elements on main wall 2b.

Accordingly, the control unit is configured to detect, for each acquired image 16:
- a first distance d1 between geometric center 21 and front edge 22; and/or
- a second distance d2 between geometric center 21 and flap edge 23; and/or
- a third distance d3 between geometric center 21 and sealing band 24.

In one embodiment, the control unit may detect only one or only two of distances d1, d2, d3.

In this way, the quality control performed by inspection system 14 according to the present disclosure is further improved, since also the positioning of each closure system 5 relative to main wall 2b can be effectively detected. Such a detection information may be advantageously transferred to capping machine 13, which may accordingly adjust the aforementioned cap applicator so as to correctly apply caps 6 even if some closure structures 5 are not perfectly positioned on main wall 2b (within a certain safe tolerance range).

In one embodiment, inspection area 17 may include rim 18 and an outer lateral wall 25 of collar 5a, as schematically shown in Figure 3c.

In detail, outer lateral wall 25 may be defined by a substantially cylindrical surface of axis A.

In such an embodiment, the control unit is configured to, for each acquired image 16:
- determine a shape of outer lateral wall 25 and of rim 18 of collar 5a from said image 16;
- detect a deviation of the determined shape of outer lateral wall 25, along a radial direction relatively to axis A, from a nominal reference shape of outer lateral wall 25 and/or a deviation of the determined shape of rim 18, along an axial direction relatively to axis A, from a nominal reference shape of rim 18.

In other words, the control unit is configured to detect radial protuberances or malformations on outer lateral wall 25 and/or axial protuberances or malformations on rim 18.

In one embodiment, the control unit may be configured to perform the same detection on opening device 5c.

This last preferential aspect of the disclosure allows for an even better quality control performed with inspection system 14.

According to a further preferential aspect of the disclosure, the control unit is configured to control a discard of the respective package 2 if the determined deviation (which can be the aforementioned circularity deviation, ovalization deviation, distance deviation and/or shape deviation) is greater than a predetermined threshold deviation value.

In this way, inspection system 14 prevents the application of caps 6 on packages 2 which closure structures 5 have a shape too distant from the nominal one.

Alternatively, or additionally, the control unit is configured to determine a deviation trend correlated to said deviation (which, again, can be the aforementioned circularity deviation, ovalization deviation, distance deviation and/or shape deviation) determined for each acquired image 16, and to emit an information signal or alert or warning if the deviation trend reaches a predetermined threshold deviation value.

In this way, inspection system 14 may allow for a timely intervention of an operator which may adjust production parameters on packaging apparatus 1, and in particular on the package forming machine. This results in a reduction of the discarded packages 2.

From the foregoing, it is clear how inspection system 14 allows for implementing a method for inspecting closure structures 5 pre-applied on packages 2 containing a pourable product, each closure structure 5 having at least a pouring collar 5a pre-applied on a main wall of the respective package, the method comprising the steps of:
a) acquiring at least one image 16 per package 2 of an inspection area 17 of the package 2, the inspection area 17 including at least the collar 5a;
b) analyzing each acquired image 16 for determining a shape of the collar 5a from said acquired image 16;
c) calculating a deviation of the determined shape of the collar 5a from a nominal reference shape of the collar 5a.

Preferably, the step b) of analyzing includes determining a circularity of said rim 18 from said acquired image 16, and the step c) of calculating includes calculating a deviation of the determined circularity of said rim 18 from a nominal reference circularity value of said rim 18.

Preferably, the method further comprises the steps of:
d1) determining a plurality of reference points on said rim 18;
d2) extrapolating and/or estimating a reference circular profile 19 of said rim 18 based on the determined plurality of reference points;
e) detecting an actual profile 20 of said rim 18 by means of the step b) of analyzing;
f) determining a deviation of the actual profile 20 from the reference circular profile 19;
g) calculating an ovalization of said rim 18 as a function of the determined deviation.

Preferably, the step f) of determining comprises:
- determining a geometric center 21 of said reference circular profile 19;
- determining a minimum radius r of said actual profile 20, with respect to the determined geometric center 21;
- determining a maximum radius R of said actual profile 20, with respect to the determined geometric center 21;
- calculating a difference between the maximum radius R and the minimum radius r; and
- correlating said difference with said deviation of the actual profile 20 from the reference circular profile 19.

In one embodiment, the step b) of analyzing comprises:
- determining a plurality of reference points on said rim 18;
- extrapolating and/or estimating a reference circular profile 19 of said rim 18 based on the determined plurality of reference points;
- determining a geometric center 21 of said reference circular profile 19;
and the method further comprises the steps of:
h) detecting a distance d1 between said geometric center 21 and the first edge 22 and/or a distance d2 between said geometric center 21 and the second edge 23 and/or a distance d3 between said geometric center 21 and the sealing band 24; and
i) calculating a deviation of the detected distance d1, d2, d3 from a nominal reference distance between said geometric center 21 and said first edge 22 and/or second edge 23 and/or sealing band 24, respectively.

From the foregoing, it is also clear how packaging apparatus 1 comprising inspection system 14 allows for implementing a method for producing capped packages 2 containing a pourable product, the method comprising the steps of:
- advancing a web 4 of packaging material;
- pre-applying a series of closure structures 5 on the advancing web 4, each closure structure 5 including at least a pouring collar 5a;
- folding the web 4 into a tube 3;
- filling the tube 3 with the pourable product;
- forming and sealing successive longitudinal portions of the tube 3 so as to obtain a plurality of packs 2a filled with the pourable product;
- folding the packs 2a so as to obtain a plurality of said packages 2 and so that each said collar 5a is arranged on a main wall 2b of the respective package 2;
- inspecting the collars 5a by executing a method for inspecting as disclosed above;
- applying one cap 6 onto each collar 5a.

The advantages of inspection system 14 and of the method for inspecting and of the for method producing capped packages according to the present disclosure will be clear from the foregoing description.

In particular, inspection system 14 according to the present disclosure allows for a simple and effective quality control on closure structures 5 pre-applied on packages 2 made from packaging material and containing a pourable product, before the application of caps 6 to these latter.

Inspection system 14 further allows for reducing the risk of the application of caps 6 on non-nominal (or faulty) packages 2 having non-nominal (or faulty) collars 5a. This results in various improvements, such as reducing the risk of packages 2 which may be difficult to be opened being delivered to end consumers, reducing the waste of caps 6, and reducing non-nominal stresses on capping machine 13 due to ovalized collars 5a.

The preferred embodiments described above allow for an even improved quality control.

Clearly, changes may be made to inspection system 14 as described herein without, however, departing from the scope of protection as defined in the accompanying claims.

## Claims

1. Inspection system (14) for a capping machine (13) configured to apply caps (6) onto packages (2) containing a pourable product and each provided with a respective closure structure (5) comprising at least a collar (5a) pre-applied at a respective main wall (2b) of the package (2) and adapted to receive one said cap (6), the inspection system (14) being configured to sequentially inspect the closure structures (5) and comprising:
- an imaging device (15) configured to acquire at least one image (16) per package of an inspection area (17) of the package (2), the inspection area (17) including at least the collar (5a); and
- a control unit configured to analyze each acquired image (16) for determining a shape of the collar (5a) from said acquired image (16);
wherein the control unit is configured to calculate a deviation of the determined shape of the collar (5a) from a nominal reference shape of the collar (5a).

2. Inspection system as claimed in claim 1, wherein the control unit is configured to determine a circularity of the collar (5a) from said acquired image (16) and to calculate a deviation of the determined circularity of the collar (5a) from a nominal reference circularity value of the collar (5a).

3. Inspection system as claimed in claim 2, wherein the inspection area (17) includes a pouring rim (18) of the collar (5a),
and wherein the control unit is configured to determine a circularity of said rim (18) from said acquired image (16) and to calculate a deviation of the determined circularity of said rim (18) from a nominal reference circularity value of said rim (18).

4. Inspection system as claimed in claim 3, wherein the control unit is configured to, for each said acquired image (16):
- determine a plurality of reference points on said rim (18) ;
- extrapolate and/or estimate a reference circular profile (19) of said rim (18) based on the determined plurality of reference points;
- detect an actual profile (20) of said rim based on the analyzed image;
- determine a deviation of the actual profile (20) from the reference circular profile (19);
- calculate an ovalization of said rim (18) correlated with the determined deviation.

5. Inspection system as claimed in claim 4, wherein the control unit is configured to:
- determine a geometric center (21) of said reference circular profile (19);
- determine a minimum radius r of said actual profile (20), with respect to the determined geometric center (21);
- determine a maximum radius (R) of said actual profile (20), with respect to the determined geometric center (21);
- calculate a difference between the maximum radius (R) and the minimum radius (r);
- determine said ovalization as a function of the calculated difference.

6. Inspection system as claimed in any one of the foregoing claims, wherein the inspection system (14) is configured to inspect closure structures (5) comprising said collar (5a) and further comprising an opening element (5c) arranged within the collar (5a), so as to be at least partially surrounded by the collar (5a), and formed integrally with the collar (5a), said inspection area (17) further including said opening element (5c);
and wherein the control unit is further configured to analyze each acquired image (16) for determining a shape of the opening element (5c) from said image (16), and to calculate a deviation of the determined shape of the opening element (5c) from a nominal reference shape of the opening element (5c).

7. Inspection system as claimed in any one of the foregoing claims, wherein the inspection area (17) further includes said main wall (2b) of the package (2) and a pouring rim (18) of the collar (5a);
and wherein the control unit is further configured to, for each said acquired image (16):
- determine a plurality of reference points on said rim (18);
- extrapolate and/or estimate a reference circular profile (19) of said rim (18) based on the determined plurality of reference points;
- determine a geometric center (21) of said reference circular profile (19);
- detect at least one distance (d1, d2, d3) between said geometric center (21) and at least one fixed reference element (22, 23, 24) on said main wall (2b);
- calculate a deviation of the detected distance (d1, d2, d3) from a nominal reference distance between said geometric center (21) and said at least one reference element (22, 23, 24).

8. Inspection system as claimed in claim 7, wherein the inspection area (17) includes a first edge (22) of said main wall (2b), a second edge (23) of said main wall (2b) transversal to said first edge (22), and a sealing band (24) of the package (2) arranged on said main wall (2b) ;
and wherein the control unit is configured to detect, for each said acquired image (16):
- a distance (d1) between said geometric center (21) and the first edge (22); and/or
- a distance (d2) between said geometric center (21) and the second edge (23); and/or
- a distance (d3) between said geometric center (21) and the sealing band (24).

9. Inspection system as claimed in any one of the foregoing claims, wherein the collar (5a) extends along a longitudinal axis (A),
wherein the inspection area (17) includes an outer lateral wall (25) of said collar (5a) and an upper pouring rim (18) of said collar (5a),
and wherein the control unit is configured to, for each acquired image (16):
- determine a shape of the outer lateral wall (25) and of the upper rim (18) from said image (16);
- detect a deviation of the determined shape of the outer lateral wall (25), along a radial direction relatively to said longitudinal axis (A), from a nominal reference shape of the outer lateral wall (25) and/or a deviation of the determined shape of the upper rim (18), along an axial direction relatively to said longitudinal axis (A), from a nominal reference shape of the upper rim (18) .

10. Inspection system as claimed in any one of the foregoing claims, wherein the control unit is configured to control a discard of the respective package (2) if the determined deviation is greater than a predetermined threshold deviation value;
and/or wherein the control unit is configured to determine a deviation trend correlated to said deviation determined for each acquired image, and to emit an information signal or alert or warning if the deviation trend reaches a predetermined threshold deviation value.

11. Capping machine (13) for applying caps (6) onto packages (2) containing a pourable product and each provided with a respective closure structure (5) comprising at least a collar (5a) pre-applied at a respective main wall (2b) of the package 82), the capping machine (13) comprising:
- a cap applicator configured to sequentially apply one cap (6) onto each collar (5a); and
- an inspection system (14) according to any one of the foregoing claims, arranged operatively upstream of the cap applicator and configured to inspect each collar (5a).

12. Packaging apparatus (1) for producing packages (2) containing a pourable product, the packaging apparatus (1) comprising:
- a package filling and forming machine configured to fill, form and seal a plurality of packages (2) provided with pre-applied closure structures (5); and
- a capping machine (13) according to claim 11 and configured to apply caps (6) on the closure structures (5) .

13. Method for inspecting closure structures (5) pre-applied on packages (2) containing a pourable product, each closure structure (5) having at least a collar (5a) pre-applied on a main wall (2b) of the respective package (2), the method comprising the steps of:
a) acquiring at least one image (16) per package of an inspection area (17) of the package (2), the inspection area (17) including at least the collar (5a);
b) analyzing each acquired image (16) for determining a shape of the collar (5a) from said acquired image (16);
c) calculating a deviation of the determined shape of the collar (5a) from a nominal reference shape of the collar (5a).

14. Method as claimed in claim 13, wherein the inspection area (17) further includes a pouring rim (18) of the collar (5a);
wherein the step b) of analyzing includes determining a circularity of said rim (18) from said acquired image (16) ;
and wherein the step c) of calculating includes calculating a deviation of the determined circularity of said rim (18) from a nominal reference circularity value of said rim (18).

15. Method as claimed in claim 14, and further comprising the steps of:
d1) determining a plurality of reference points on said rim (18);
d2) extrapolating and/or estimating a reference circular profile (19) of said rim (18) based on the determined plurality of reference points;
e) detecting an actual profile (20) of said rim (18) by means of the step b) of analyzing;
f) determining a deviation of the actual profile (20) from the reference circular profile (19);
g) calculating an ovalization of said rim (18) as a function of the determined deviation.

16. Method as claimed in claim 15, wherein the step f) of determining comprises:
- determining a geometric center (21) of said reference circular profile (19);
- determining a minimum radius (r) of said actual profile (20), with respect to the determined geometric center (21);
- determining a maximum radius (R) of said actual profile (20), with respect to the determined geometric center (21);
- calculating a difference between the maximum radius (R) and the minimum radius (r); and
- correlating said difference with said deviation of the actual profile (20) from the reference circular profile (19).

17. Method as claimed in any of the claims 13 to 16, wherein the inspection area (17) also includes a pouring rim (18) of the collar (5a), said main wall (2b), a first edge (22) of said main wall (2b), a second edge (23) of said main wall (2b) transversal to said first edge (22) and a sealing band (24) of the package (2) arranged on said main wall (2b);
wherein the step b) of analyzing comprises:
- determining a plurality of reference points on said rim (18);
- extrapolating and/or estimating a reference circular profile (19) of said rim (18) based on the determined plurality of reference points;
- determining a geometric center (21) of said reference circular profile (19);
and wherein the method further comprises the steps of:
h) detecting a distance (d1) between said geometric center (21) and the first edge (22) and/or a distance (d2) between said geometric center (21) and the second edge (23) and/or a distance (d3) between said geometric center (21) and the sealing band (24); and
i) calculating a deviation of the detected distance (d1, d2, d3) from a nominal reference distance between said geometric center (21) and said first edge (22) and/or second edge (23) and/or sealing band (24), respectively.

18. Method for producing capped packages (2) containing a pourable product, the method comprising the steps of:
- advancing a web (4) of packaging material;
- pre-applying a series of closure structures (5) on the advancing web (4), each closure structure (5) including at least a pouring collar (5a);
- folding the web (4) into a tube (3);
- filling the tube (3) with the pourable product;
- forming and sealing successive longitudinal portions of the tube (3) so as to obtain a plurality of packs (2a) filled with the pourable product;
- folding the packs (2a) so as to obtain a plurality of said packages (2) and so that each said collar (5a) is arranged on a main wall (2b) of the respective package (2) ;
- inspecting the collars (5a) by executing a method according to any one of the claims 13 to 17;
- applying one cap (6) onto each collar (5a).

## Amended claims

### Amended claims in accordance with Rule 137(2) EPC.

1. Inspection system (14) for a capping machine (13) configured to apply caps (6) onto packages (2) containing a pourable product and each provided with a respective closure structure (5) comprising at least a collar (5a) pre-applied at a respective main wall (2b) of the package (2) and adapted to receive one said cap (6), the inspection system (14) being configured to sequentially inspect the closure structures (5) and comprising:
- an imaging device (15) configured to acquire at least one image (16) per package of an inspection area (17) of the package (2), the inspection area (17) including at least the collar (5a); and
- a control unit configured to analyze each acquired image (16) for determining a shape of the collar (5a) from said acquired image (16);
wherein the control unit is configured to calculate a deviation of the determined shape of the collar (5a) from a nominal reference shape of the collar (5a),
**characterized in that** the control unit is configured to determine a circularity of the collar (5a) from said acquired image (16) and to calculate a deviation of the determined circularity of the collar (5a) from a nominal reference circularity value of the collar (5a).

2. Inspection system as claimed in claim 1, wherein the inspection area (17) includes a pouring rim (18) of the collar (5a),
and wherein the control unit is configured to determine a circularity of said rim (18) from said acquired image (16) and to calculate a deviation of the determined circularity of said rim (18) from a nominal reference circularity value of said rim (18).

3. Inspection system as claimed in claim 2, wherein the control unit is configured to, for each said acquired image (16):
- determine a plurality of reference points on said rim (18);
- extrapolate and/or estimate a reference circular profile (19) of said rim (18) based on the determined plurality of reference points;
- detect an actual profile (20) of said rim based on the analyzed image;
- determine a deviation of the actual profile (20) from the reference circular profile (19);
- calculate an ovalization of said rim (18) correlated with the determined deviation.

4. Inspection system as claimed in claim 3, wherein the control unit is configured to:
- determine a geometric center (21) of said reference circular profile (19);
- determine a minimum radius r of said actual profile (20), with respect to the determined geometric center (21);
- determine a maximum radius (R) of said actual profile (20), with respect to the determined geometric center (21);
- calculate a difference between the maximum radius (R) and the minimum radius (r);
- determine said ovalization as a function of the calculated difference.

5. Inspection system as claimed in any one of the foregoing claims, wherein the inspection system (14) is configured to inspect closure structures (5) comprising said collar (5a) and further comprising an opening element (5c) arranged within the collar (5a), so as to be at least partially surrounded by the collar (5a), and formed integrally with the collar (5a), said inspection area (17) further including said opening element (5c);
and wherein the control unit is further configured to analyze each acquired image (16) for determining a shape of the opening element (5c) from said image (16), and to calculate a deviation of the determined shape of the opening element (5c) from a nominal reference shape of the opening element (5c).

6. Inspection system as claimed in any one of the foregoing claims, wherein the inspection area (17) further includes said main wall (2b) of the package (2) and a pouring rim (18) of the collar (5a);
and wherein the control unit is further configured to, for each said acquired image (16):
- determine a plurality of reference points on said rim (18);
- extrapolate and/or estimate a reference circular profile (19) of said rim (18) based on the determined plurality of reference points;
- determine a geometric center (21) of said reference circular profile (19);
- detect at least one distance (d1, d2, d3) between said geometric center (21) and at least one fixed reference element (22, 23, 24) on said main wall (2b);
- calculate a deviation of the detected distance (d1, d2, d3) from a nominal reference distance between said geometric center (21) and said at least one reference element (22, 23, 24).

7. Inspection system as claimed in claim 6, wherein the inspection area (17) includes a first edge (22) of said main wall (2b), a second edge (23) of said main wall (2b) transversal to said first edge (22), and a sealing band (24) of the package (2) arranged on said main wall (2b);
and wherein the control unit is configured to detect, for each said acquired image (16):
- a distance (d1) between said geometric center (21) and the first edge (22); and/or
- a distance (d2) between said geometric center (21) and the second edge (23); and/or
- a distance (d3) between said geometric center (21) and the sealing band (24).

8. Inspection system as claimed in any one of the foregoing claims, wherein the collar (5a) extends along a longitudinal axis (A),
wherein the inspection area (17) includes an outer lateral wall (25) of said collar (5a) and an upper pouring rim (18) of said collar (5a),
and wherein the control unit is configured to, for each acquired image (16):
- determine a shape of the outer lateral wall (25) and of the upper rim (18) from said image (16);
- detect a deviation of the determined shape of the outer lateral wall (25), along a radial direction relatively to said longitudinal axis (A), from a nominal reference shape of the outer lateral wall (25) and/or a deviation of the determined shape of the upper rim (18), along an axial direction relatively to said longitudinal axis (A), from a nominal reference shape of the upper rim (18).

9. Inspection system as claimed in any one of the foregoing claims, wherein the control unit is configured to control a discard of the respective package (2) if the determined deviation is greater than a predetermined threshold deviation value;
and/or wherein the control unit is configured to determine a deviation trend correlated to said deviation determined for each acquired image, and to emit an information signal or alert or warning if the deviation trend reaches a predetermined threshold deviation value.

10. Capping machine (13) for applying caps (6) onto packages (2) containing a pourable product and each provided with a respective closure structure (5) comprising at least a collar (5a) pre-applied at a respective main wall (2b) of the package 82), the capping machine (13) comprising:
- a cap applicator configured to sequentially apply one cap (6) onto each collar (5a); and
- an inspection system (14) according to any one of the foregoing claims, arranged operatively upstream of the cap applicator and configured to inspect each collar (5a).

11. Packaging apparatus (1) for producing packages (2) containing a pourable product, the packaging apparatus (1) comprising:
- a package filling and forming machine configured to fill, form and seal a plurality of packages (2) provided with pre-applied closure structures (5); and
- a capping machine (13) according to claim 10 and configured to apply caps (6) on the closure structures (5).

12. Method for inspecting closure structures (5) pre-applied on packages (2) containing a pourable product, each closure structure (5) having at least a collar (5a) pre-applied on a main wall (2b) of the respective package (2), the method comprising the steps of:
a) acquiring at least one image (16) per package of an inspection area (17) of the package (2), the inspection area (17) including at least the collar (5a);
b) analyzing each acquired image (16) for determining a shape of the collar (5a) from said acquired image (16);
c) calculating a deviation of the determined shape of the collar (5a) from a nominal reference shape of the collar (5a),
**characterized in that** the inspection area (17) further includes a pouring rim (18) of the collar (5a);
wherein the step b) of analyzing includes determining a circularity of said rim (18) from said acquired image (16);
and wherein the step c) of calculating includes calculating a deviation of the determined circularity of said rim (18) from a nominal reference circularity value of said rim (18).

13. Method as claimed in claim 12, and further comprising the steps of:
d1) determining a plurality of reference points on said rim (18);
d2) extrapolating and/or estimating a reference circular profile (19) of said rim (18) based on the determined plurality of reference points;
e) detecting an actual profile (20) of said rim (18) by means of the step b) of analyzing;
f) determining a deviation of the actual profile (20) from the reference circular profile (19);
g) calculating an ovalization of said rim (18) as a function of the determined deviation.

14. Method as claimed in claim 13, wherein the step f) of determining comprises:
- determining a geometric center (21) of said reference circular profile (19);
- determining a minimum radius (r) of said actual profile (20), with respect to the determined geometric center (21);
- determining a maximum radius (R) of said actual profile (20), with respect to the determined geometric center (21);
- calculating a difference between the maximum radius (R) and the minimum radius (r); and
- correlating said difference with said deviation of the actual profile (20) from the reference circular profile (19).

15. Method as claimed in any of the claims 12 to 14, wherein the inspection area (17) also includes a pouring rim (18) of the collar (5a), said main wall (2b), a first edge (22) of said main wall (2b), a second edge (23) of said main wall (2b) transversal to said first edge (22) and a sealing band (24) of the package (2) arranged on said main wall (2b);
wherein the step b) of analyzing comprises:
- determining a plurality of reference points on said rim (18);
- extrapolating and/or estimating a reference circular profile (19) of said rim (18) based on the determined plurality of reference points;
- determining a geometric center (21) of said reference circular profile (19);
and wherein the method further comprises the steps of:
h) detecting a distance (d1) between said geometric center (21) and the first edge (22) and/or a distance (d2) between said geometric center (21) and the second edge (23) and/or a distance (d3) between said geometric center (21) and the sealing band (24); and
i) calculating a deviation of the detected distance (d1, d2, d3) from a nominal reference distance between said geometric center (21) and said first edge (22) and/or second edge (23) and/or sealing band (24), respectively.

16. Method for producing capped packages (2) containing a pourable product, the method comprising the steps of:
- advancing a web (4) of packaging material;
- pre-applying a series of closure structures (5) on the advancing web (4), each closure structure (5) including at least a pouring collar (5a);
- folding the web (4) into a tube (3);
- filling the tube (3) with the pourable product;
- forming and sealing successive longitudinal portions of the tube (3) so as to obtain a plurality of packs (2a) filled with the pourable product;
- folding the packs (2a) so as to obtain a plurality of said packages (2) and so that each said collar (5a) is arranged on a main wall (2b) of the respective package (2);
- inspecting the collars (5a) by executing a method according to any one of the claims 12 to 15;
- applying one cap (6) onto each collar (5a).
